# EUROPÄISCHE PATENTSCHRIFT

(11) **EP 0 369 940 B1**
(45) Veröffentlichungstag und Bekanntmachung des Hinweises auf die Patenterteilung: **31.05.1995**
(21) Anmeldenummer: 89810836.0
(22) Anmeldetag: 06.11.1989
(51) Int. Cl.: C09B 69/04, C09B 67/26, C09B 29/01

(54) **Konzentrierte Farbstofflösungen**
Concentrated dye solutions
Solutions concentrées de colorants

(30) Priorität: 15.11.1988 CH 4223/88
(43) Veröffentlichungstag der Anmeldung: 23.05.1990
(73) Patentinhaber: CIBA-GEIGY AG, 4002 Basel (CH)
(72) Erfinder: Morawietz, Hans, Dr., CH-4206 Seewen (CH)

(56) Entgegenhaltungen:
- EP-A- 0 030 337
- FR-A- 2 373 586
- FR-A- 2 378 003
- US-A- 3 862 116

## Beschreibung

Gegenstand der vorliegenden Erfindung sind konzentrierte wässrige Farbstofflösungen, enthaltend
a) 7 bis 30 Gew.-% eines Farbstoffes der Formel 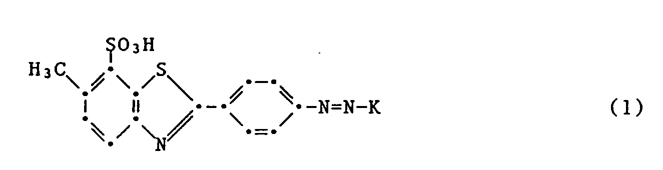 worin K eine Kupplungskomponente der Pyrimidinreihe ist,
b) 1 bis 5 Mol 3-Diethylamino-1-propylamin, 2-Diethylaminoethanol oder 2-(2-Aminoethoxy)-ethanol pro Mol Farbstoff der Formel (1) und
c) gegebenenfalls weitere Zusätze.

Vorzugsweise enthalten die erfindungsgemässen Farbstofflösungen 10 bis 25 Gew.-% eines Farbstoffes der Formel (1).

In der obigen Formel (1) bedeutet K eine Kupplungskomponente der Pyrimidinreihe. Es handelt sich vor allem um die bei Azofarbstoffen, insbesondere bei Papierfarbstoffen, gebräuchlichen Kupplungskomponenten.

Vorzugsweise ist K eine Kupplungskomponente der Formel 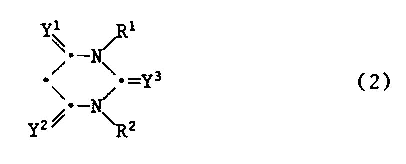
worin
- Y¹ und Y²: unabhängig voneinander =O, =NH oder =N-C₁-C₄-Alkyl,
- Y³: =O, =S, =NR oder =N-CN, wobei R Wasserstoff oder C₁-C₄-Alkyl ist, und
- R¹ und R²: unabhängig voneinander je Wasserstoff, gegebenenfalls substituiertes Alkyl oder gegebenenfalls substituiertes Phenyl bedeuten.

In der obigen Formel (2) ist für die Kupplungskomponente nur eine tautomere Form angegeben, auch die anderen tautomeren Formen sollen jedoch durch diese Formel mit umfasst sein.

Stellen R¹ und/oder R² eine gegebenenfalls substituierte Alkylgruppe dar, so ist darunter z.B. ein Methyl-, Ethyl-, n- oder iso-Propyl-, n-, sec.-oder tert.-Butyl-, ein geradkettiger oder verzweigter Pentyl- oder Hexyl-oder ein Cyclohexylrest zu verstehen, der einfach oder mehrfach z.B. durch -OH, C₁-C₄-Alkoxy oder C₁-C₄-Hydroxyalkoxy substituiert sein kann.

Beispiele für geeignete substituierte Alkylreste sind:
Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypropyl, Methoxybutyl, Ethoxypentyl und 2-Hydroxyethoxypentyl.

Bedeuten R¹ und/oder R² gegebenenfalls substituiertes Phenyl, so kann es sich um unsubstituiertes oder einfach oder mehrfach mit gleichen oder verschiedenen Resten substituiertes Phenyl handeln.

Als derartige Reste kommen z.B. in Frage: C₁-C₄-Alkyl, worunter generell in dieser Anmeldung Methyl, Ethyl, n- oder iso-Propyl oder n-, sec.-oder tert.-Butyl zu verstehen ist, C₁-C₄-Alkoxy, welches in dieser Anmeldung generell, Methoxy, Ethoxy, n- oder iso-Propoxy oder n-, sec.-oder tert.-Butoxy umfasst, Halogen wie Fluor, Chlor oder Brom oder Nitro.

Vorzugsweise handelt es sich bei R¹ und/oder R² als Phenyl um unsubstituiertes oder mit 1 bis 3 C₁-C₄-Alkyl, Chlor oder Methoxygruppen substituiertes Phenyl, wobei insbesondere die Bedeutung unsubstituiertes Phenyl bevorzugt ist.

R¹ und R² stehen bevorzugt für Wasserstoff oder C₁-C₄-Alkyl und besonders bevorzugt für Wasserstoff oder Methyl.

Y¹ und/oder Y² stehen vorzugsweise für die funktionelle Gruppe =O oder =NH, wobei es ausserdem bevorzugt ist, dass Y¹ und Y² gleich sind. Y¹ und Y² sind besonders bevorzugt gleich und bedeuten jeweils =NH.

Y³ stellt bevorzugt die Gruppe =O, =S, =NH oder =N-CN und insbesondere bevorzugt die Gruppe =NH dar.

In einer besonders bevorzugten Ausführungsform enthalten die erfindungsgemässen Farbstofflösungen Azofarbstoffe der Formel (1), worin R¹ und R² unabhängig voneinander je Wasserstoff oder C₁-C₄-Alkyl, Y¹ und Y² unabhängig voneinander je =O oder =NH und Y³ =O, =S, =NH oder =N-CN bedeutet.

Die Farbstoffe der Formel (1) sind bekannt oder werden auf bekannte Art und Weise erhalten.

Die erfindungsgemässen wässrigen Farbstofflösungen enthalten mindestens 1 Mol Amin, ausgewählt aus der Gruppe, bestehend aus 3-Diethylamino-1-propylamin, 2-Diethylaminoethanol und 2-(2-Aminoethoxy)-ethanol, pro Mol Farbstoff der Formel (1). Vorzugsweise enthalten die Farbstofflösungen 1 bis 4 Mol Amin pro Mol Farbstoff. Von den genannten Aminen ist 3-Diethylamino-1-propylamin besonders bevorzugt.

Zusätzlich können die erfindungsgemässen Farbstofflösungen wasserlösliche organische Lösungsvermittler enthalten. In Frage kommen z.B.: Harnstoff, Formamid, ε-Caprolactam, Dimethylformamid, 1,2-Diaminopropan, mehrwertige Alkohole, wie z.B. Ethylenglykol, Propylenglykol oder Glycerin, Alkanolamine, wie z.B. Ethanolamin, Diethanolamin, Triethanolamin, 2-Dimethylaminoethanol, 2-Methylaminoethanol, N,N-Bis-(2-hydroxyethyl)-1,3-diaminopropan oder N-(2-Hydroxyethyl)-ethylendiamin.

Die Menge an organischem Lösungsvermittler hängt u.a. davon ab, wieviel der drei obengenannten Amine, 3-Diethylamino-1-propylamin, 2-Diethylaminoethanol oder 2-(2-Aminoethoxy)-ethanol in den Farbstofflösungen enthalten ist. Liegt der Gehalt an den genannten Aminen bei ca. 2 bis 4 Mol pro Mol Farbstoff, so ist im allgemeinen kein organischer Lösungsvermittler oder nur ca. 5 bis 10 Gew.-% davon, bezogen auf das Gesamtgewicht der Farbstofflösung, erforderlich. Andererseits ist es aus ökonomischen Gründen oft vorteilhaft, den Gehalt an den genannten Aminen bei ca. 1 bis 2,5 Mol pro Mol Farbstoff einzustellen und zusätzlich ca. 10 bis 25 Gew.-% an organischem Lösungsvermittler einzusetzen.

Bevorzugte erfindungsgemässe wässrige Farbstofflösungen enthalten
a) 10 bis 30 Gew.-% eines Farbstoffes der Formel (1),
b) 1 bis 4 Mol 3-Diethylamino-1-propylamin, 2-Diethylaminoethanol oder 2-(2-Aminoethoxy)-ethanol pro Mol Farbstoff der Formel (1) sowie
c) 0 bis 25 Gew.-% eines organischen Lösungsvermittlers.

Unter diesen sind diejenigen besonders bevorzugt, welche
a) 10 bis 30 Gew.-% eines Farbstoffes der Formel (1),
b) 1 bis 2,5 Mol 3-Diethylamino-1-propylamin, 2-Diethylaminoethanol oder 2-(2-Aminoethoxy)-ethanol pro Mol Farbstoff der Formel (1) sowie
c) 10 bis 25 Gew.-% eines organischen Lösungsvermittlers enthalten.

Die Herstellung der erfindungsgemässen konzentrierten wässrigen Farbstofflösungen erfolgt im allgemeinen in der Weise, dass die freien Farbstoffsäuren mit einer Mischung aus Wasser, 3-Diethylamino-1-propylamin, 2-Diethylaminoethanol oder 2-(2-Aminoethoxy)-ethanol sowie gegebenenfalls einem organischen Lösungsvermittler verrührt werden, bis eine homogene Lösung entsteht. Falls erforderlich kann die Mischung erwärmt werden, z.B. auf 40 bis 80°C, und evtl. filtriert werden.

Die erhaltenen konzentrierten wässrigen Farbstofflösungen zeichnen sich vor allem durch eine gute Lagerstabilität aus.

Verwendung finden die erfindungsgemässen konzentrierten Farbstofflösungen, gegebenenfalls nach dem Verdünnen mit Wasser, insbesondere zum Färben und Bedrucken von Papier, einschliesslich Halbkartons und Kartons, wobei man diese Materialien z.B. in der Masse, durch Streichen oder durch Tauchen färben kann. Im übrigen kann eine derartige Flüssigformulierung auch für ein kontinuierliches oder diskontinuierliches Färbeverfahren für Textilmaterialien, insbesondere Cellulose, eingesetzt werden.

Die CH-A-632527 beschreibt bereits lagerstabile, konzentrierte, wässrige Lösungen von Azofarbstoffen mit Barbitursäure als Kupplungskomponente.

Die nachfolgenden Beispiele veranschaulichen die Erfindung. Darin bedeuten Teile Gewichtsteile.

Beispiel 1: 920 Teile des wässrigen Presskuchens, enthaltend 260 Teile des Farbstoffes der Formel 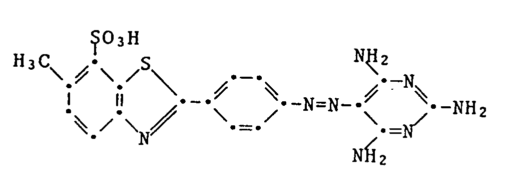
als freie Farbstoffsäure, werden mit 296 Teilen 3-Diethylamino-1-propylamin versetzt und mit Wasser auf ein Gesamtgewicht von 2080 Teile gestellt. Die erhaltene Suspension wird unter Rühren auf 50°C erwärmt und bei dieser Temperatur so lange gerührt, bis der Farbstoff vollständig in Lösung gegangen ist. Die Farbstofflösung wird dann noch klärfiltriert.

Man erhält eine flüssige Farbstoff-Handelsform, welche auch nach einmonatiger Lagerung bei 3-5°C keinerlei Rückstand zeigt.

Beispiel 2: 920 Teile des gleichen wässrigen Presskuchens wie im Beispiel 1 werden mit 296 Teilen 3-Diethylamino-1-propylamin und 291 Teilen Harnstoff versetzt, mit Wasser auf ein Gesamtgewicht von 2080 Teile gestellt und im übrigen wie im Beispiel 1 ausgeführt zu einer flüssigen Handelsform weiterverarbeitet.

Die Handelsform zeigt auch nach einmonatiger Lagerung bei 3-5°C keinerlei feste Rückstände.

Beispiel 3: 920 Teile des gleichen wässrigen Presskuchens wie im Beispiel 1 werden mit 148 Teilen 3-Diethylamino-1-propylamin, 60 Teilen Diethanolamin, 43 Teilen 2-Methylaminoethanol und 291 Teilen Harnstoff versetzt, mit Wasser auf ein Gesamtgewicht von 2080 Teile gestellt und im übrigen wie im Beispiel 1 ausgeführt zu einer flüssigen Handelsform weiterverarbeitet.

Die Handelsform zeigt auch nach einmonatiger Lagerung bei 3-5°C keinerlei feste Rückstände.

Beispiel 4: 920 Teile des gleichen wässrigen Presskuchens wie im Beispiel 1 werden mit 148 Teilen 3-Diethylamino-1-propylamin, 60 Teilen Diethanolamin und 43 Teilen 2-Methylaminoethanol versetzt, mit Wasser auf ein Gesamtgewicht von 2080 Teile gestellt und im übrigen wie im Beispiel 1 ausgeführt zu einer flüssigen Handelsform weiterverarbeitet.

Die Handelsform zeigt auch nach einmonatiger Lagerung bei 3-5°C keinerlei feste Rückstände.

Beispiel 5-8: Man arbeitet wie im Beispiel 3 beschrieben, verwendet jedoch anstelle des dort eingesetzten Farbstoffes äquivalente Mengen der Farbstoffe, die man durch Diazotierung von Dehydrothiotoluidin-7-sulfonsäure und Kuppeln mit den in der folgenden Tabelle aufgeführten Kupplungskomponenten erhält.

Man erhält auf diese Weise konzentrierte Lösungen der Farbstoffe, welche sich durch gute Lagerstabilität auszeichnen.

| Beispiel | Kupplungskomponente |
|---|---|
| 5 | Barbitursäure |
| 6 | Cyaniminobarbitursäure |
| 7 | 1,3-Dimethylbarbitursäure |
| 8 | 4-Amino-2,6-dihydroxypyrimidin |

Beispiel 9: Arbeitet man wie im Beispiel 1 beschrieben, verwendet jedoch anstelle von 296 Teilen 3-Diethylamino-1-propylamin die gleiche Menge 2-Diethylaminoethanol, so erhält man eine flüssige stabile Farbstoff-Handelsform.

Beispiel 10: Arbeitet man wie im Beispiel 1 beschrieben, verwendet jedoch anstelle von 296 Teilen 3-Diethylamino-1-propylamin die gleiche Menge 2-(2-Aminoethoxy)-ethanol, so erhält man eine flüssige stabile Farbstoff-Handelsform.

Beispiel 11: In einem Holländer werden 70 Teile chemisch gebleichte Sulfitzellulose aus Nadelholz und 30 Teile chemisch gebleichte Sulfitzellulose aus Birkenholz in 2000 Teilen Wasser gemahlen. Zu dieser Masse gibt man 0,3 Teile der im Beispiel 3 beschriebenen Farbstoff-Handelsform. Nach 20 Minuten Mischzeit wird aus dieser Masse Papier hergestellt. Das auf diese Weise erhaltene saugfähige Papier ist gelb gefärbt. Das Abwasser ist praktisch farblos.

## Patentansprüche

1. Konzentrierte wässrige Farbstofflösungen, enthaltend
a) 7 bis 30 Gew.-% eines Farbstoffes der Formel 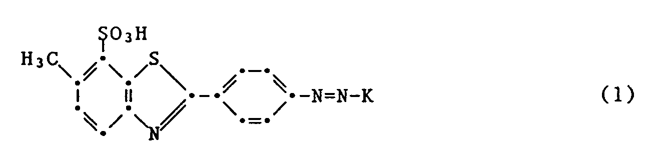 worin K eine Kupplungskomponente der Pyrimidinreihe ist,
b) 1 bis 5 Mol 3-Diethylamino-1-propylamin, 2-Diethylaminoethanol oder 2-(2-Aminoethoxy)-ethanol pro Mol Farbstoff der Formel (1) und
c) gegebenenfalls weitere Zusätze.

2. Konzentrierte wässrige Farbstofflösung gemäss Anspruch 1, enthaltend 10 bis 25 Gew.-% eines Farbstoffes der Formel (1).

3. Konzentrierte wässrige Farbstofflösung gemäss einem der Ansprüche 1 oder 2, enthaltend einen Farbstoff der Formel (1), worin
K eine Kupplungskomponente der Formel 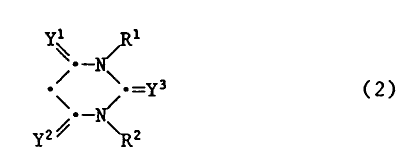
bedeutet, worin
Y¹ und Y² unabhängig voneinander =O, =NH oder =N-C₁-C₄-Alkyl,
Y³ =O, =S, =NR oder =N-CN, wobei R Wasserstoff oder C₁-C₄-Alkyl ist, und
R¹ und R² unabhängig voneinander je Wasserstoff, gegebenenfalls substituiertes Alkyl oder gegebenenfalls substituiertes Phenyl bedeuten.

4. Konzentrierte wässrige Farbstofflösung gemäss einem der Ansprüche 1 bis 3, worin R¹ und R² unabhängig voneinander je Wasserstoff oder C₁-C₄-Alkyl bedeuten.

5. Konzentrierte wässrige Farbstofflösung gemäss einem der Ansprüche 1 bis 4, worin Y¹ und Y² unabhängig voneinander je =O oder =NH bedeuten.

6. Konzentrierte wässrige Farbstofflösung gemäss einem der Ansprüche 1 bis 5, worin Y³ =O, =S, =NH oder =N-CN, insbesondere =NH bedeutet.

7. Konzentrierte wässrige Farbstofflösung gemäss einem der Ansprüche 1 bis 6, worin R¹ und R² unabhängig voneinander je Wasserstoff oder C₁-C₄-Alkyl, Y¹ und Y² unabhängig voneinder je =O oder =NH und Y³ =O, =S, =NH oder =N-CN bedeutet.

8. Konzentrierte wässrige Farbstofflösung gemäss einem der Ansprüche 1 bis 7, dadurch gekennzeichnet, dass sie 1 bis 4 Mol, 3-Diethylamino-1-propylamin, 2-Diethylaminoethanol oder 2-(2-Aminoethoxy)-ethanol pro Mol Farbstoff enthalten.

9. Konzentrierte wässrige Farbstofflösung gemäss einem der Ansprüche 1 bis 8, dadurch gekennzeichnet, dass sie 3-Diethylamino-1-propylamin enthalten.

10. Konzentrierte wässrige Farbstofflösung gemäss einem der Ansprüche 1 bis 9, dadurch gekennzeichnet, dass sie zusätzlich einen organischen Lösungsvermittler enthalten.

11. Konzentrierte wässrige Farbstofflösung gemäss einem der Ansprüche 1-10, dadurch gekennzeichnet, dass sie als organischen Lösungsvermittler Harnstoff, ε-Caprolactam, einen mehrwertigen Alkohol oder ein Alkanolamin enthalten.

12. Konzentrierte wässrige Farbstofflösung gemäss einem der Ansprüche 1-11, enthaltend
a) 10 bis 30 Gew.-% eines Farbstoffes der Formel (1),
b) 1 bis 4 Mol 3-Diethylamino-1-propylamin, 2-Diethylaminoethanol oder 2-(2-Aminoethoxy)-ethanol pro Mol Farbstoff der Formel (1) sowie
c) 0 bis 25 Gew.-% eines organischen Lösungsvermittlers.

13. Konzentrierte Farbstofflösung gemäss Anspruch 12, enthaltend
a) 10 bis 30 Gew.-% eines Farbstoffes der Formel (1),
b) 1 bis 2,5 Mol 3-Diethylamino-1-propylamin, 2-Diethylaminoethanol oder 2-(2-Aminoethoxy)-ethanol pro Mol Farbstoff der Formel (1) sowie
c) 10 bis 25 Gew.-% eines organischen Lösungsvermittlers.

14. Verfahren zur Herstellung von konzentrierten wässrigen Farbstofflösungen, dadurch gekennzeichnet, dass man einen Farbstoff der Formel 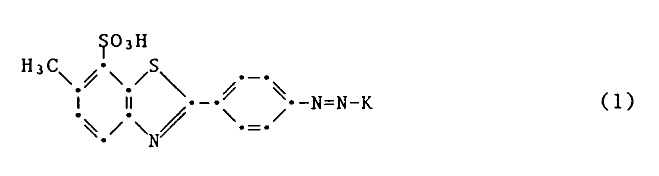 worin K eine Kupplungskomponente der Pyrimidinreihe bedeutet, mit einer Mischung aus Wasser, 3-Diethylamino-1-propylamin, 2-Diethylaminoethanol oder 2-(2-Aminoethoxy)-ethanol und gegebenenfalls einem organischen Lösungsvermittler verrührt, bis eine homogene Lösung entsteht.

15. Verwendung der Farbstofflösungen gemäss einem der Ansprüche 1 bis 13 zum Färben von Textilmaterial aus Cellulose und insbesondere von Papier.

## Claims

1. A concentrated aqueous dye solution containing
a) 7 to 30 % by weight of a dye of the formula 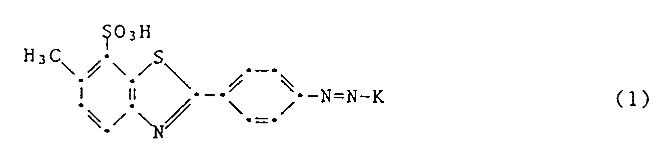 where K is a coupling component of the pyrimidine series,
b) 1 to 5 moles of 3-diethylamino-1-propylamine, 2-diethylaminoethanol or 2-(2-aminoethoxy)ethanol per mole of dye of the formula (1) and
c) further, optional additives.

2. A concentrated aqueous dye solution according to claim 1, containing 10 to 25 % by weight of a dye of the formula (1).

3. A concentrated aqueous dye solution according to either of claims 1 and 2, containing a dye of the formula (1) where
K is a coupling component of the formula 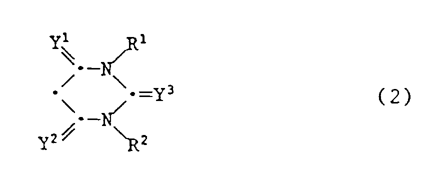 where Y¹ and Y² are each independently of the other =O, =NH or =N-C₁-C₄alkyl,
Y³ is =O, =S, =NH or =N-CN, where R is hydrogen or C₁-C₄alkyl and
R¹ and R² are each independently of the other hydrogen, substituted or unsubstituted alkyl or substituted or unsubstituted phenyl.

4. A concentrated aqueous dye solution according to any one of claims 1 to 3, wherein R¹ and R² are each independently of the other hydrogen or C₁-C₄alkyl.

5. A concentrated aqueous dye solution according to any one of claims 1 to 4, wherein Y¹ and Y² are each independently of the other =O or =NH.

6. A concentrated aqueous dye solution according to any one of claims 1 to 5, wherein Y³ is =O, =S, =NH or =N-CN, in particular =NH.

7. A concentrated aqueous dye solution according to any one of claims 1 to 6, wherein R¹ and R² are each independently of the other hydrogen or C₁-C₄alkyl, Y¹ and Y² are each independently of the other =O or =NH and Y³ is =O, =S, NH or =N-CN.

8. A concentrated aqueous dye solution according to any one of claims 1 to 7, containing 1 to 4 moles of 3-diethylamino-1-propylamine, 2-diethylaminoethanol or 2-(2-aminoethoxy)ethanol per mole of dye.

9. A concentrated aqueous dye solution according to any one of claims 1 to 8, containing 3-diethylamino-1-propylamine.

10. A concentrated aqueous dye solution according to any one of claims 1 to 9, containing in addition an organic solubilizer.

11. A concentrated aqueous dye solution according to any one of claims 1-10, containing urea, ε-caprolactam, a polyhydric alcohol or an alkanolamine as organic solubilizer.

12. A concentrated aqueous dye solution according to any one of claims 1-11, containing
a) 10 to 30 % by weight of a dye of the formula (1),
b) 1 to 4 moles of 3-diethylamino-1-propylamine, 2-diethylaminoethanol or 2-(2-aminoethoxy)ethanol per mole of dye of the formula (1), and
c) 0 to 25 % by weight of an organic solubilizer.

13. A concentrated dye solution according to claim 12, containing
a) 10 to 30 % by weight of a dye of the formula (1),
b) 1 to 2.5 moles of 3-diethylamino-1-propylamine, 2-diethylaminoethanol or 2-(2-aminoethoxy)ethanol per mole of dye of the formula (1) and
c) 10 to 25 % by weight of an organic solubilizer.

14. A process for preparing a concentrated aqueous dye solution, which comprises stirring a dye of the formula 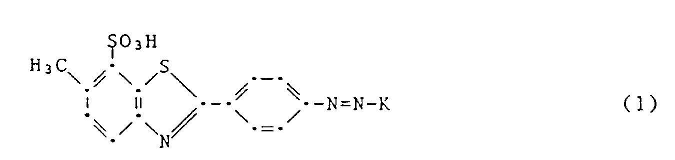 where K is a coupling component of the pyrimidine series, with a mixture of water, 3-diethylamino-1-propylamine, 2-diethylaminoethanol or 2-(2-aminoethoxy)ethanol in the presence or absence of an organic solubilizer until a homogeneous solution has formed.

15. The use of a dye solution according to any one of claims 1 to 13, for dyeing textile material made of cellulose or in particular paper.

## Revendications

1. Solutions aqueuses concentrées de colorants, contenant
a) de 7 à 30 % en poids d'un colorant de formule 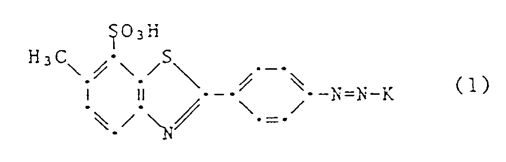 dans laquelle K représente un copulant de la série pyrimidinique,
b) de 1 à 5 moles de 3-diéthylamino-1-propylamine, de 2-diéthylaminoétnanol ou de 2-(2-aminoéthoxy)-éthanol par mole de colorant de formule (1) et
c) éventuellement d'autres additifs.

2. Solution aqueuse concentrée de colorants conforme à la revendication 1 contenant de 10 à 25 % en poids d'un colorant de formule (1).

3. Solution aqueuse concentrée de colorants conforme à une des revendications 1 ou 2, contenant un colorant de formule (1), dans laquelle K représente un copulant de formule 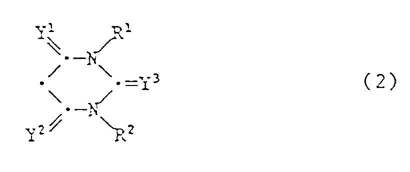 dans laquelle
Y¹ et Y² représentent indépendamment l'un de l'autre un groupe =O, =NH ou =NH-(alkyle en C₁₋₄),
Y³ représente un groupe =O, =S =NR ou =N-CN, où R est un atome d'hydrogène ou un groupe alkyle en C₁₋₄, et
R¹ et R² représentent indépendamment l'un de l'autre un atome d'hydrogène, un groupe alkyle éventuellement substitué ou un groupe phényle éventuellement substitue.

4. Solution aqueuse concentrée de colorants conforme à une des revendications 1 à 3 dans laquelle R¹ et R² représentent indépendamment l'un de l'autre un atome d'hydrogène ou un groupe alkyle en C₁₋₄.

5. Solution aqueuse concentrée de colorants conforme à une des revendications 1 à 4, dans laquelle Y¹ et/ou Y² représentent indépendamment l'un de l'autre un groupe =O ou =NH.

6. Solution aqueuse concentrée de colorants conforme à une des revendications 1 à 5 dans laquelle Y³ représente de préférence un groupe =O, =S, =NH ou =N-CH et en particulier le groupe =NH.

7. Solution aqueuse concentrée de colorants conforme à une des revendications 1 à 6 dans laquelle R¹ et R² représentent indépendamment l'un de l'autre un atome d'hydrogène ou un groupe alkyle en C₁₋₄, Y¹ et Y² représentent indépendamment l'un de l'autre un groupe =O ou =NH et Y³ représente un groupe =O, =S, =NH ou =N-CH.

8. Solution aqueuse concentrée de colorants conforme à une des revendications 1 à 7, caractérisée en ce qu'elle contient de 1 à 4 moles de 3-diéthylamino-1-propylamine, de 2-diéthylaminoéthanol ou de 2-(2-aminoéthoxy)-éthanol par mole de colorant.

9. Solution aqueuse concentrée de colorants conforme à une des revendications 1 à 8, caractérisée en ce qu'elle contient de la 3-diéthylamino-1-propylamine.

10. Solution aqueuse concentrée de colorants conforme à une des revendications 1 à 9, caractérisée en ce qu'elle contient en plus un agent solubilisant organique.

11. Solution aqueuse concentrée de colorants conforme à une des revendications 1 à 10, caractérisée en ce qu'elle contient comme agent solubilisant organique de l'urée, du ε-caprolactame, un alcool polyvalent ou une alcanolamine.

12. Solution aqueuse concentrée de colorants conforme à une des revendications 1 à 11 contenant
a) de 10 à 30 % en poids d'un colorant de formule (1),
b) de 1 à 4 moles de 3-diéthylamino-1-propylamine, 2-diéthylaminoéthanol ou 2-(2-aminoéthoxy)-éthanol par mole de colorant de formule (1) ainsi que
c) de 0 à 25 % en poids d'un agent solubilisant organique.

13. Solution aqueuse concentrée de colorants conforme à la revendication 12 contenant
a) de 10 à 30 % en poids d'un colorant de formule (1),
b) de 1 à 2,5 moles de 3-diéthylamino-1-propylamine, 2-diéthylaminoéthanol ou 2-(2-aminoéthoxy)-éthanol par mole de colorant de formule (1) ainsi que
c) de 10 à 25 % en poids d'un agent solubilisant organique.

14. Procédé pour préparer des solutions aqueuses concentrées de colorants, caractérisé en ce que l'on agite un colorant de formule 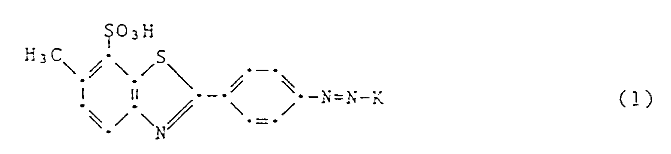 dans laquelle K représente un copulant de la série pyrimidinique, avec un mélange d'eau, de 3-diéthylamino-1-propylamine, 2-diéthylaminoéthanol ou 2-(2-aminoéthoxy)-éthanol et éventuellement d'un agent solubilisant organique jusqu'à obtenir une solution homogène.

15. Utilisation des solutions de colorants conformes à une des revendications 1 à 13 pour la teinture de matériaux textiles en cellulose et en particulier pour la teinture de papier.
